Europäisches Patentamt

European Patent Office

Office européen des brevets

(11) Numéro de publication: **0 323 310**
**A1**

## (12) DEMANDE DE BREVET EUROPEEN

(21) Numéro de dépôt: **88403224.4**

(22) Date de dépôt: **16.12.88**

(51) Int. Cl.4: **H 04 L 11/20**

(30) Priorité: **24.12.87 FR 8718163**

(43) Date de publication de la demande:
**05.07.89 Bulletin 89/27**

(84) Etats contractants désignés:
**BE CH DE ES GB IT LI NL SE**

(71) Demandeur: **ETAT FRANCAIS représenté par le Ministre des Postes, des Télécommunications et de l'Espace (CENTRE NATIONAL D'ETUDES DES TELECOMMUNICATIONS) 38-40 rue du Général Leclerc F-92131 Issy-les-Moulineaux (FR)**

(72) Inventeur: **Quinquis, Jean-Paul rue de Cornic F-22700 Perros-Guirec (FR)**

**Servel, Michel Le Rhu en Servel F-22300 Lannion (FR)**

**Lespagnol, Albert 33, rue de Landerval F-22700 Perros-Guirec (FR)**

(74) Mandataire: **Martinet & Lapoux 62, rue des Mathurins F-75008 Paris (FR)**

(54) Circuit de gestion de pointeurs d'écriture de files tampons notamment pour commutateur temporel de paquets auto-acheminables.

(57) Le circuit selon l'invention comprend une mémoire de pointeurs (MP) mémorisant J = 16 pointeurs d'écriture décrémentés ((PE0) - 1 à (PE15) - 1) associés à J = 16 files tampons. Un mot d'acheminement (AA) fourni conjointement à des données entrantes et indiquant la file tampon dans laquelle ces données sont à écrire, adresse le pointeur d'écriture décrémenté correspondant. Le pointeur d'écriture est obtenu à la suite d'une incrémentation effectuée par un additionneur (ADD1). Le pointeur d'écriture et la mot d'acheminement forment une adresse d'écriture (AE) pour une mémoire tampon supportant les J = 16 files. Un comparateur (CMP) détecte l'égalité entre le pointeur d'écriture et un pointeur de lecture (PL) et interdit dans ce cas la prise en compte des données entrantes qui écraseraient des données non encore lues. Des moyens logiques (EX, N0, ET1, MUX) associés au comparateur commandent l'actualisation, par incrémentation éventuelle, des valeurs de pointeurs d'écriture contenues dans la mémoire de pointeurs, après chaque écriture et lecture de données dans les files tampons. Ce circuit est particulièrement bien adapté pour être utilisé dans un commutateur temporel de paquets auto-acheminables asynchrones.

FIG.4

## Description

### Circuit de gestion de pointeurs d'écriture de files tampons notamment pour commutateur temporel de paquets auto-acheminables

La présente invention concerne de manière générale la gestion de l'écriture et de la lecture de données dans une pluralité de files tampons. Plus particulièrement, l'invention a trait à la gestion de l'écriture et de la lecture de paquets dans une pluralité de files tampons incluses dans un système de commutation temporel de paquets asynchrones et éventuellement synchrones.

Dans un tel système de commutation, des files tampons sont respectivement associées à des multiplex temporels sortants. Les paquets entrants sont mémorisés provisoirement, au fur et à mesure de leur arrivée, dans les files associées aux multiplex sortants vers lesquels doivent être transmis les paquets. Des pointeurs d'écriture associés respectivement aux files indiquent chacun une première cellule libre de la file correspondante. Les files sont lues cycliquement sous la commande d'une base de temps sélectionnant successivement en lecture chacune des files et délivrant un pointeur de lecture incrémenté à chaque fin de cycle de lecture des files.

Le débit des paquets entrants destinés à une même file est variable et les paquets sont écrits dans la file à des instants pratiquement aléatoires.

Une file tampon est dimensionnée pour absorber des fluctuations moyennes du débit des paquets entrants par rapport à un débit moyen de sorte que, généralement, le niveau de remplissage des files évolue entre un niveau minimum où la file est vide et un niveau maximum où la file est pleine mais sans atteindre le niveau maximum. Toutefois, des augmentations sporadiques du débit des paquets entrants peuvent être telles que le niveau de remplissage de la file atteint le niveau maximum. Toutes nouvelles écritures de paquets entrants dans la file pleine doivent alors être inhibées en attendant que la file se vide.

La présente invention vise à fournir un circuit pour gérer les pointeurs d'écriture d'une pluralité de files tampons conçu pour être utilisé dans un système de commutation tel que décrit ci-dessus.

A cette fin, le circuit selon l'invention pour gérer des pointeurs d'écriture d'une pluralité de files tampons est tel que défini par la revendication 1.

Un autre objectif de l'invention est de fournir un système de commutation temporel de paquets auto-acheminables pour la mise en oeuvre du circuit pour gérer des pointeurs selon l'invention.

A cette fin, un système de commutation temporel de paquets auto-acheminables selon l'invention est tel que défini par la revendication 10.

D'autres caractéristiques et avantages de la présente invention apparaîtront plus clairement à la lecture de la description suivante en référence aux dessins annexés correspondants dans lesquels :

- la Fig. 1 est un bloc-diagramme d'un système de commutation de paquets auto-acheminables asynchrones pour la mise en oeuvre du circuit selon l'invention ;
- la Fig. 2 montre en détail la structure d'une mémoire tampon de paquets et d'un circuit d'insertion de paquets de synchronisation compris dans le système de commutation montré à la Fig. 1 ;
- la Fig. 3 montre l'organisation de la mémoire tampon de paquets en une pluralité de files tampons de paquets respectivement associées à des multiplex temporels sortants du système de commutation.
- la Fig. 4 est un block-diagramme détaillé d'une première réalisation préférée d'un circuit de gestion des pointeurs d'écriture de files tampons selon l'invention inclus dans le système de commutation ;
- la Fig.5 montre des états successifs d'une file tampon au voisinage de l'état "file vide" ;
- la Fig. 6 montre des états successifs d'une file tampon au voisinage de l'état "file pleine"; et
- la Fig. 7 est un bloc-diagramme détaillé d'une seconde réalisation préférée du circuit de gestion des pointeurs d'écriture de files tampons selon l'invention.

Un commutateur temporel de paquets auto-acheminables asynchrones de longueur fixe, de type à conversion dite paragonale pour la mise en oeuvre du circuit selon l'invention est décrit, à titre d'exemple, dans les paragraphes suivants. Un commutateur à conversion paragonale est divulgué dans la demande de brevet EP-A-0113639 à laquelle on se reportera pour des informations complémentaires sur ce type de conversion .

Le commutateur décrit est un commutateur de transit inclus dans un réseau temporel asynchrone comprenant par exemple trois étages de commutation, des premier et dernier étages constitués par des commutateurs de type à circuits virtuels et un étage intermédiaire constitué par des commutateurs de transit. Il assure la commutation de paquets de longueur fixe provenant de $I = 16$ multiplex entrants E0 à E15 et à transmettre vers $J = 16$ multiplex sortants S0 à S15. Les paquets ont une longueur fixe L égale $I = J = 16$ octets. Chaque paquet est composé d'un premier octet B0 incluant un mot d'auto-acheminement AA, d'un second octet B1 correspondant à une étiquette ET, et de $L - 2 = 14$ octets d'information B2 à B15. Le commutateur commute un paquet en fonction de la valeur de son mot d'auto-acheminement AA indiquant le multiplex sortant Sj, où j est un entier quelconque compris entre 0 et $J - 1 = 15$, vers lequel doit être transmis ce paquet. Le mot AA prend l'une des valeurs entières de 0 à $J - 1 = 15$ et est codé par $\log_2 J = 4$ bits prédéterminés de l'octet B0. L'étiquette ET d'un paquet transitant à travers le commutateur n'est pas modifiée par celui-ci ; elle est commutée et transmise de la même manière qu'un octet d'information. En effet, l'étiquette ET est destinée plus particulièrement à un commutateur à circuits virtuels du dernier étage de commutation, situé en aval du commutateur de transit. Le commutateur de transit n'utilise l'étiquette ET que pour la détection de paquets vides PV dits également paquets de synchronisation et non pour la commande d'aiguillage. Un multiplex entrant quelconque Ei, où i est un entier compris entre 0 et $I - 1 = 15$, convoie des paquets valides PQ, c'est-à-dire contenant des informations valides à transmettre, et les paquets de synchronisation PV qui ne sont pas à transmettre vers les multiplex sortants S1 à S15. Un paquet de synchronisation PV comprend une étiquette ET égale, par exemple, à "00001111" et 14 octets B2 à B15 égaux, par exemple, à "01010101". Un paquet valide d'information PQ a une étiquette ET différente de "00001111".

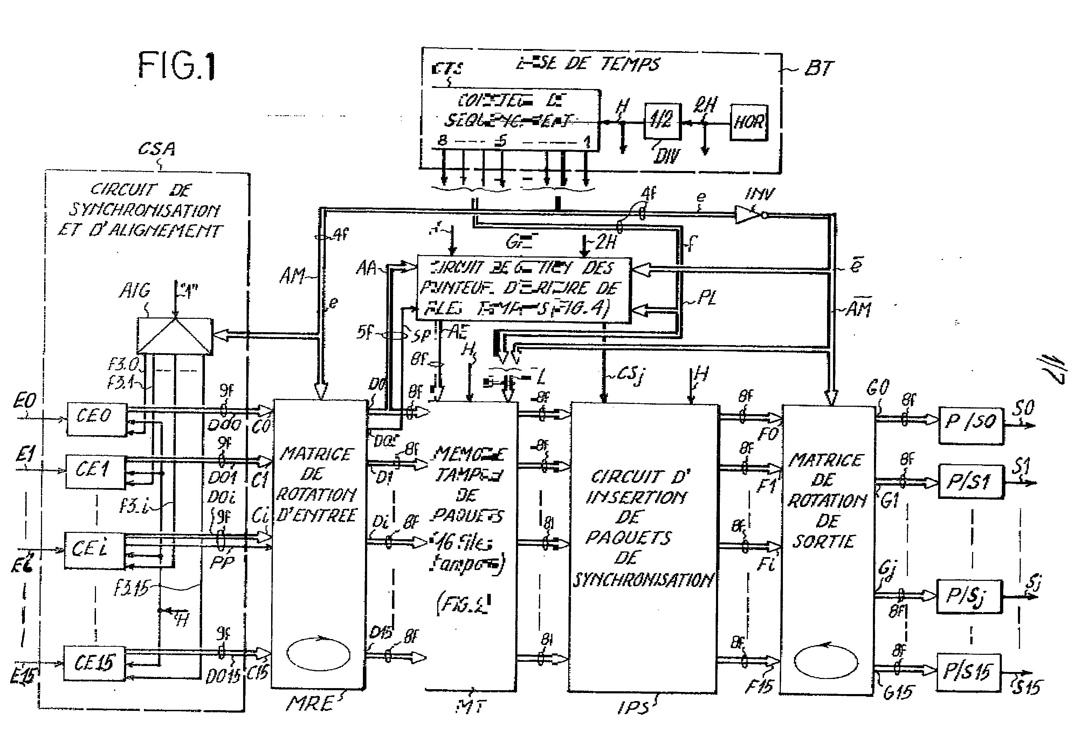

En référence à la Fig. 1, le commutateur de paquets auto-acheminables pour la mise en oeuvre du circuit de gestion des pointeurs d'écriture de files tampons GPE selon l'invention comprend essentiellement, outre le circuit GPE, une base de temps BT, un circuit de synchronisation et d'alignement CSA, une matrice de rotation d'entrée MRE, une matrice de rotation de sortie MRS, une mémoire tampon de paquets MT et un circuit d'insertion de paquets de synchronisation IPS.

La base de temps BT comprend un oscillateur HOR produisant un signal d'horloge local 2H de période prédéterminée T/2, un diviseur de fréquence par 2, DIV, recevant le signal 2H et délivrant un signal d'horloge local H de période égale à T, et un compteur de séquencement CTS.

Le compteur de séquencement CTS est un compteur binaire ayant un nombre d'étages au moins égal à 8. Il reçoit le signal H à une entrée d'horloge.

Quatre sorties 1 à 4 respectivement de quatre étages de plus faibles poids dans le compteur CTS sont connectées à un premier bus d'adresse de multiplex e à quatre fils et délivrent cycliquement $I = J = 16$ adresses de sélection de multiplex AM = "0000" à AM = "1111" respectivement pendant des intervalles temporels égaux IT0 à IT15 d'une trame de durée égale à 16T. Les adresses AM sont fournies au circuit de synchronisation et d'alignement CSA et à la matrice de rotation d'entrée MRE afin de commander leur séquencement. Un inverseur INV inverse les adresses AM et fournit cycliquement à travers un second bus d'adresse de multiplex $\overline{e}$, des adresses de sélection de multiplex inversées $\overline{AM}$ = "1111" à $\overline{AM}$ = "0000" à la matrice de rotation de sortie MRS ainsi qu'au circuit GPE et à la mémoire tampon MT.

Quatre sorties 5 à 8 respectivement de quatre étages de plus forts poids dans le compteur CTS sont connectées à un bus f convoyant un mot dit pointeur de lecture PL qui prend cycliquement $P = 16$ valeurs successives "0000" à "1111". Les adresses de sélection de multiplex $\overline{AM}$ et le pointeur de lecture PL sont fournis en parallèle à la mémoire tampon MT et forment des adresses de lecture de paquet AL pour adresser cycliquement en lecture $J.P = 16^2 = 256$ cellules de mémoire où sont stockés les paquets.

Le circuit de synchronisation et d'alignement CSA a essentiellement pour fonction d'aligner différents paquets PQ et PV transmis en plésiochronisme dans les multiplex entrants E0 à E15 et de les transmettre à la matrice de rotation d'entrée MRE en synchronisme, au rythme du signal d'horloge local H. Le circuit d'alignement et de synchronisation CSA est constitué de 16 circuits d'entrée CE0 à CE15 et d'un aiguilleur-démultiplexeur de commande AIG.

Les multiplex E0 à E15 sont connectés respectivement aux circuits CE0 à CE15 et fournissent bit par bit les paquets PQ et PV convoyés sous forme série.

Dans un circuit d'entrée CEi, les paquets PQ délivrés par le multiplex Ei sont stockés dans une file tampon avant d'être délivrés via un bus DOi, octet par octet et sous la commande du signal d'horloge H, à huit entrées d'un port à 9 entrées parallèles Ci de la matrice MRE. Une neuvième entrée du port Ci reçoit, en parallèle avec les octets, un signal de signalisation PP fourni par le circuit CEi. Le signal PP est à un état logique "1" lorsque les octets en cours de transmission sont des octets d'un paquet d'information PQ, et à un état logique "0" lorsque les octets en cours de transmission sont des octets d'un paquet de synchronisation PV.

L'aiguilleur-démultiplexeur AIG a une entrée de données câblée à un état logique "1" et 16 sorties reliées respectivement par des fils f3.0 à f3.15 à des entrées de commande et de synchronisation de lecture des circuits CE0 à CE15. Des entrées de sélection de l'aiguilleur AIG sont reliées au bus e et reçoivent les adresses AM.

Les circuits d'entrée CE0 à CE15 sont commandés séquentiellement en lecture par l'aiguilleur AIG, à travers les fils f3.0 à f3.15. Un circuit d'entrée CEi délivre au port Ci de la matrice MRE un paquet entre deux activations successives par l'aiguilleur AIG.

Le début de la transmission d'un premier octet B0 d'un paquet au port Ci est synchrone à une impulsion à l'état "1" délivré dans le fil f3.i par l'aiguilleur AIG. L'aiguilleur démultiplexeur AIG du circuit CSA commande séquentiellement les circuits CE0 à CE15 de telle manière que si le premier octet B0 d'un paquet est délivré par le circuit d'entrée CEi au temps $t_o$, pendant l'intervalle temporel ITi, le circuit CE(i + 1) délivre le premier octet B0 d'un autre paquet au temps $t_o + T$. La transmission des paquets par les circuits CE0 à CE15, respectivement aux ports C0 à C15 de la matrice MRE, est assurée de manière "oblique" dans le temps. Ce type de transmission est destiné à éviter que deux ou plusieurs mots d'auto-acheminement de paquet soient délivrés simultanément par deux ou plusieurs circuits d'entrée CE aux ports C de la matrice MRE.

Les matrices MRE et MRS sont analogues. La matrice MRE réalise une conversion paragonale en effectuant sous la commande de la base de temps BT, reliée à la matrice MRE par le bus e, un cycle de 0 à 15 permutations sur les octets et bits fournis à la matrice MRE respectivement pendant les intervalles temporels IT0 à IT15 assignés aux multiplex entrants E0 à E15.

Un paquet ayant $L = 16$ octets, B0 à B15, est fourni par des ports de sortie D0 à D15 de la matrice MRE sous la forme diagonale de telle sorte que si l'octet B0 est fourni par le port D0 au temps $t_o$, les

octets B1, B2, ... B15 sont fournis par les ports D1, D2, ... D15 aux temps $t_0 + T$, $t_0 + 2T$, ... $t_0 + 15T$, respectivement.

La matrice MRS réalise sur les paquets, après le traitement de commutation dans la mémoire MT, une conversion paragonale inverse afin de délivrer les paquets sortant de la matrice MRS selon une configuration analogue à celle des paquets entrant dans la matrice MRE. Des entrées de commande de permutation de la matrice MRS sont reliées au bus $\overline{e}$ afin de commander dans la matrice MRS le cycle de 0 à 15 permutations dans un ordre inverse à celui effectué dans la matrice MRE. Des ports à 8 entrées F0 à F15 de la matrice MRS reçoivent des octets de paquets issus de la mémoire de paquets MT et du circuit d'insertion de paquets de synchronisation IPS. Les octets de paquets sont fournis par la matrice MRS via des ports à huit sorties, G0 à G15, à des convertisseurs parallèle-série, P/S0 à P/S15, qui les transmettent bit par bit dans les multiplex sortants S0 à S15.

Suite aux permutations effectuées dans la matrice MRE, tous les octets B0 sont délivrés par le premier port de sortie D0 de la matrice MRE. Le port D0 est constitué de 9 sorties parallèles . Une première sortie DOS du port D0 délivre en parallèle avec les octets B0 de paquets, des bits de signalisation SP en série correspondant aux états logiques du signal de signalisation PP respectivement pour les paquets sortant de la matrice MRE. Pour un paquet sortant d'information PQ, le bit SP correspondant est à l'état "1" ; pour un paquet sortant de synchronisation PV, le bit SP correspondant est à l'état "0". Les octets B0 sont délivrés par les 8 sorties restantes du port D0. Les ports D0 à D15 appliquent par des bus respectifs à 8 fils, les octets B0 à B15 de paquets à 16 ports à 8 entrées parallèles de données de la mémoire de paquets MT. De plus, la sortie DOS délivrant les bits SP et quatre autres sorties du port D0 délivrant les mots d'auto-acheminement AA sont reliées par un bus à 5 fils au circuit GPE.

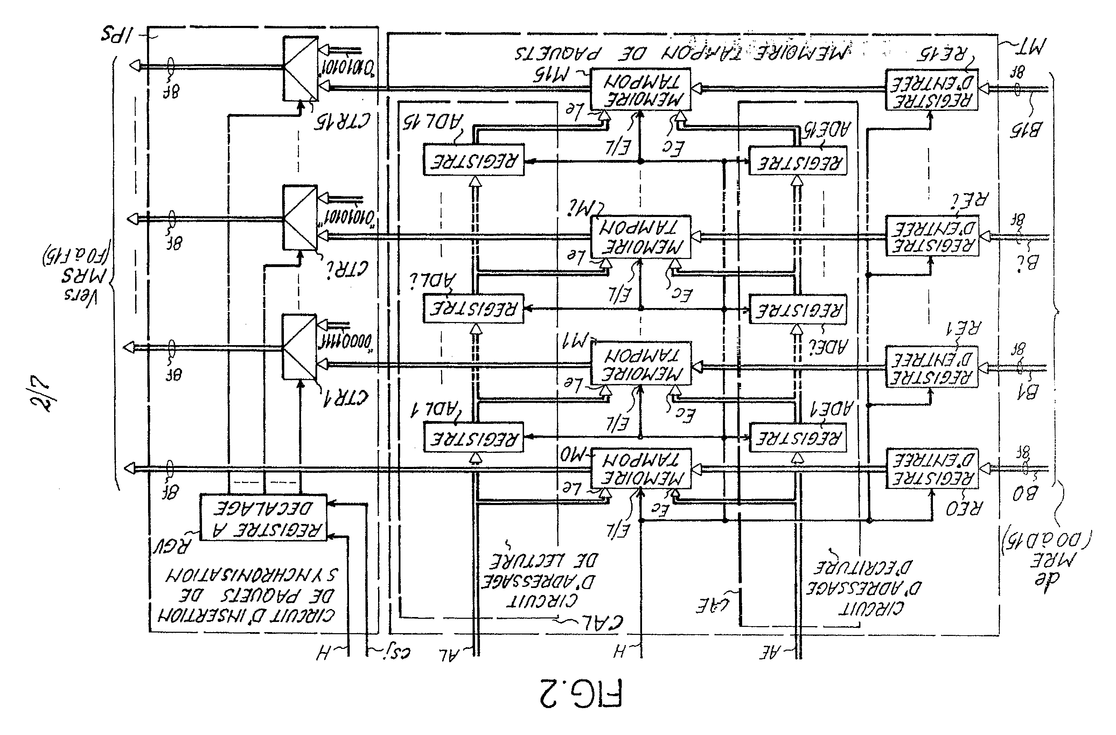

La mémoire tampon de paquets MT est montrée à la Fig. 2. La mémoire MT comprend $I = J = 16$ sous-mémoires tampons d'octet M0 à M15, $I = J = 16$ registres d'entrée RE0 à RE15, un circuit d'adressage d'écriture CAE, et un circuit d'adressage de lecture CAL.

Les sous-mémoires M0 à M15 mémorisent respectivement les octets B0 à B15 de paquets. Les sous-mémoires M0 à M15 ont chacune une capacité égale à $J.P = 256$ octets. Les octets B0 à B15 de paquets sont fournis en diagonale à des entrées de données des sous-mémoires M0 à M15 à travers les registres d'entrée RE0 à RE15, respectivement. Les registres d'entrée RE0 à RE15 sont commandés en écriture et en lecture par le signal d'horloge H et ont pour fonction d'introduire un temps de retard égal à la période T du signal d'horloge H. Ce temps de retard compense un temps de réponse du circuit GPE, entre l'instant auquel un mot d'auto-acheminement AA est reçu par le circuit GPE et l'instant auquel une adresse d'écriture de paquet AF indiquant une cellule de paquet CP libre de la mémoire tampon MT dans laquelle doit être écrit le paquet entrant est délivrée en réponse par le circuit GPE.

Le circuit d'adressage d'écriture CAE a pour fonction de décaler temporellement en diagonale l'application de chacune des adresses d'écriture de paquet AE fournies par le circuit GPE, à des entrées d'adresse d'écriture Ec des sous-mémoires M0 à M15 en synchronisme avec les transferts en diagonale des octets d'un paquet à écrire, des registres d'entrée RE0 à RE15 vers les entrées de données des sous-mémoires M0 à M15. Les paquets sont ainsi mémorisés dans la mémoire MT sous forme parallèle, c'est-à-dire que tous les octets B0 à B15 d'un paquet sont mémorisés respectivement dans les sous-mémoires M0 à M15 à une même adresse AE.

Le circuit CAE comprend $J - 1 = 15$ registres ADE1 à ADE15 associés respectivement aux sous-mémoires M1 à M15. L'écriture et la lecture des registres ADE1 à ADE15 sont commandées par le signal d'horloge H. Les registres ADE1 à ADE15 sont connectés en cascade et forment une "ligne à retard". Chacun des registres ADE1 à ADE15 introduit un temps de retard égal à une période T du signal d'horloge H sur l'adresse d'écriture AE fournie en entrée du circuit CAE. Une adresse d'écriture AE quelconque fournie par le circuit GPE est appliquée directement aux entrées d'adresses d'écriture Ec de la sous-mémoire M0, et à des entrées de données du registre ADE1 afin d'être fournie par des sorties de données des registres ADE1, ... ADEi,...ADE15, aux entrées d'adresses d'écriture Ec des sous-mémoires M1, ... Mi, ... M15 respectivement à des temps $t_0 + T$, ... $t_0 + iT$, ... $t_0 + 15T$, si l'on considère que l'adresse AE est appliquée aux entrées Ec de la sous-mémoire M0 au temps $t_0$.

Le circuit d'adressage de lecture CAL est analogue au circuit d'adressage d'écriture CAL. Il a pour fonction d'adresser en lecture les sous-mémoires M0 à M15 de manière décalée dans le temps, afin que les paquets lus soient délivrés par les sous-mémoires M0 à M15 sous forme diagonale. Le circuit CAL comprend $J - 1 = 15$ registres, ADL1 à ADL15, associés respectivement aux sous-mémoires M1 à M15 et connectés en cascade. Tous les registres ADL1 à ADL15 sont commandés en écriture et lecture par le signal d'horloge H. Chacun des registres ADL1 à ADL15 introduit un temps de retard égal à la période T. Ainsi, si une adresse de lecture de paquet AL est appliquée à des entrées d'adresse de lecture Le de la sous-mémoire M0 au temps $t_0$, cette même adresse AL est appliquée aux entrées Le des sous-mémoires M1, ... Mi, ... M15 respectivement aux temps $t_0 + T$, ... $t_0 + iT$, ... $t_0 + 15T$ et consécutivement le paquet mémorisé dans la cellule de mémoire d'adresse AL est délivré en diagonale.

Les sous-mémoires M0 à M15 sont commandées alternativement en écriture et lecture. A cette fin, le signal d'horloge H est appliqué à des entrées de commande d'écriture/lecture E/L des sous-mémoires M0 à M15 et commande l'écriture de paquets pendant des premières demi-périodes où il est à l'état logique "1" et leur lecture pendant des secondes demi-périodes où il est à l'état logique "0".

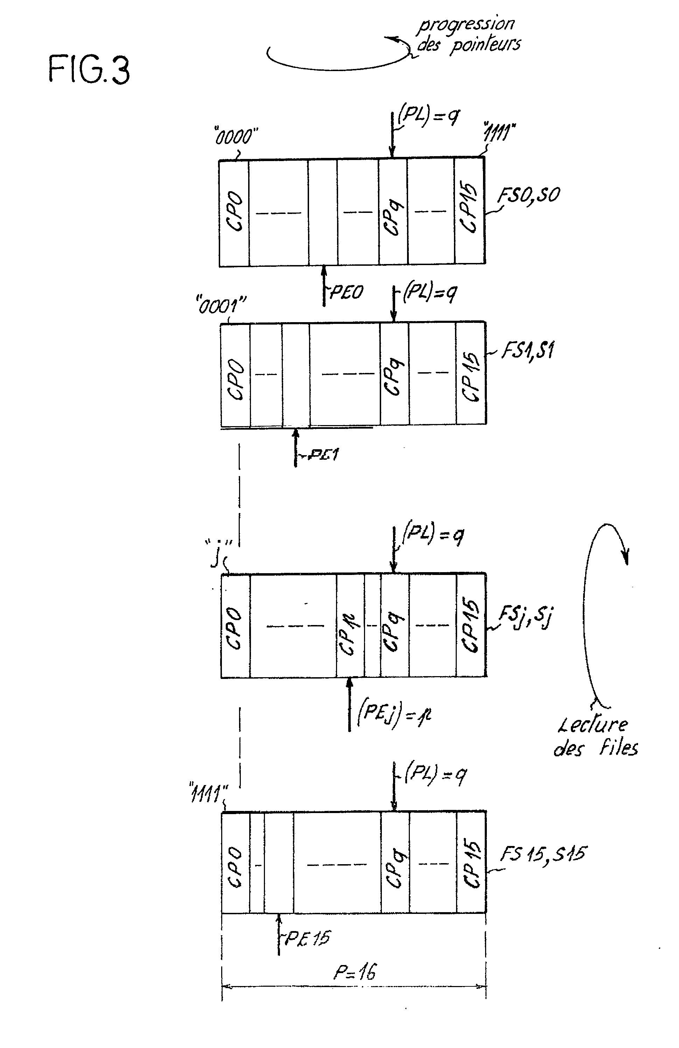

En référence à la Fig. 3, la mémoire tampon MT est structurée comme un ensemble de $J = 16$ files

tampons FS0 à FS15 ayant pour adresses "0000" à "1111" et respectivement associées aux J = 16 multiplex sortants S0 à S15. Les files tampon FS0 à FS15 sont composées chacune de P = 16 cellules de paquet CP0 à CP15 ayant pour adresses "000" à "1111". Pour l'écriture d'un paquet entrant dans la mémoire tampon MT, le circuit GPE fournit une adresse d'écriture de paquet à huit bits AE dont quatre bits de poids faible sont constituées des quatre bits du mot d'auto-acheminement AA et adressent une file FSj, et dont quatre bits de poids fort sont constitués des quatre bits d'un pointeur d'écriture PEj de la file FSj mémorisé dans le circuit GPE et adressent une cellule vide CPq de la file FSj. Le circuit GPE mémorise et gère J = 16 pointeurs d'écriture PE0 à PE15 respectivement associés aux files FS0 à FS15. La lecture des paquets dans la mémoire tampon MT est cyclique et est commandée par la base de temps BT délivrant les adresses de lecture AL composées par les adresses de multiplex $\overline{AM}$ et le pointeur de lecture PL. Les files de sortie FS0 à FS15 adressées par les adresses de multiplex et de file $\overline{AM}$ = "1111" à $\overline{AM}$ = "0000" sont lues cycliquement dans l'ordre FS15 à FS0 afin de transmettre respectivement dans les multiplex sortants S15 à S0, à chaque période de trame de durée J.T, J = 16 paquets sortants correspondants. Le pointeur de lecture de file PL délivré par la base de temps BT est incrémenté à la fréquence 1/(J.T), à la fin de chaque cycle de lecture des files FS15 à FS0 et prend successivement les valeurs "0000", ... "q", ... "1111", où q est compris entre 0 = "0000" et 15 = "1111", pour adresser successivement en lecture les cellules CP0, ... CPq, ... CP15 des files FS15 à FS0.

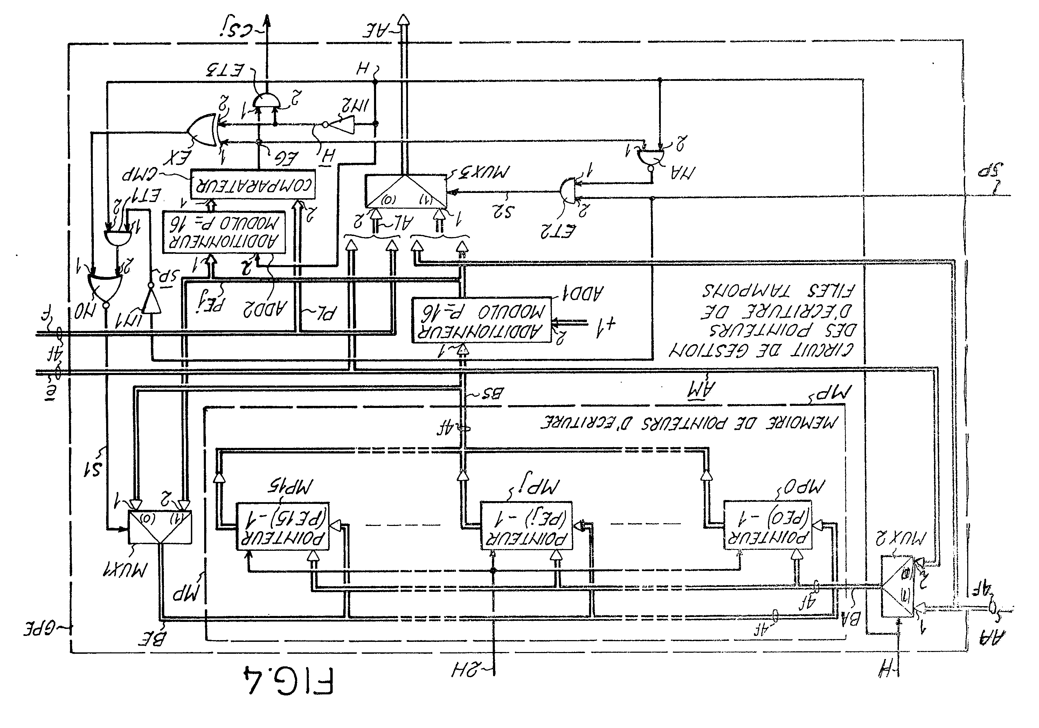

En référence à la Fig. 4, le circuit de gestion des pointeurs d'écriture GPE comprend essentiellement une mémoire RAM de pointeurs d'écriture MP, des premier et second additionneurs modulo P = 16, ADD1 et ADD2, un comparateur CMP, et trois multiplexeurs MUX1, MUX2 et MUX3.

La mémoire de pointeurs MP est composée de J = 16 cellules de mémoire élémentaires à 4 bits MP0 à MP15 mémorisant respectivement les valeurs décrémentées de 1, (PE0) - 1 à (PE15) - 1, des pointeurs d'écriture PE0 à PE15. Un bus d'entrée de données BE à quatre fils relie des entrées parallèles de données de chacune des cellules MP0 à MP15 à des sorties parallèles du multiplexeur MUX1. Un bus d'adresses BA à quatre fils relie des entrées parallèles d'adresses des cellules MP0 à MP15 à des sorties parallèles du multiplexeur MUX2. Un bus de sortie de données BS à quatre fils relie des sorties parallèles de données de chacune des cellules MP0 à MP15 à des premières entrées parallèles de l'additionneur ADD1 et à des premières entrées parallèles du multiplexeur MUX1. Le signal d'horloge 2H de période T/2 est appliqué à J = 16 entrées de sélection d'écriture/lecture respectivement des J = 16 cellules MP0 à MP15. Les états logiques "1" et "0" du signal 2H déclenchent des écritures et des lectures de la valeur (PEj) - 1 mémorisée dans la cellule MPj adressée par le multiplexeur MUX2, respectivement.

L'additionneur ADD1 a pour fonction d'incrémenter de 1 la valeur (PEj) - 1 fournie par la cellule MPj adressée afin d'obtenir la valeur (PEj) du pointeur d'écriture PEj de la file FSj. Des sorties parallèles de l'additionneur ADD1 sont reliées à des secondes entrées parallèles du multiplexeur MUX1, à des premières entrées parallèles de l'aditionneur ADD2, et à quatre premières entrées parallèles de poids fort du multiplexeur MUX3. Le multiplexeur MUX3 reçoit parallèlement, par quatre premières entrées parallèles de poids faible, les mots d'auto-acheminement AA.

L'additionneur ADD2 a pour fonction d'incrémenter de 1 la valeur (PEj) fournie par l'additionneur ADD1 afin de produire la valeur (PEj) + 1 et cela uniquement pendant des écritures de paquets, H = 1. A cette fin, une seconde entrée de l'additionneur ADD2 reçoit le signal H. Des sorties parallèles de l'additionneur ADD2 sont reliées à des premières entrées parallèles du comparateur CMP.

Le comparateur CMP indique des égalités entre les valeurs (PEj) des pointeurs d'écriture PEj et les valeurs (PL) du pointeur de lecture PL pendant des lectures de paquets, H = 0, afin de détecter des états "file vide" des files FS0 à FS15, et entre les valeurs (PEj) + 1 des pointeurs d'écriture et les valeurs (PL) du pointeur de lecture pendant des écritures de paquets, H = 1, afin de détecter des états "file pleine" des files FS0 à FS15. Des secondes entrées parallèles du comparateur CMP sont connectées au bus f et reçoivent cycliquement à la fréquence 1/(J.T) les différentes valeurs (PL) = "0000" à (PL) = "1111" du pointeur de lecture PL. Une sortie du comparateur CMP est connectée à des premières entrées d'une porte OU exclusif, EX, et d'une porte NON-ET, NA, et délivre un signal logique EG à un état logique "1" lorsque les valeurs (PEj) ou (PEj) + 1 et (PL) appliquées respectivement aux premières et secondes entrées du comparateur CMP sont égales et à un état logique "0" dans le cas contraire.

Le multiplexeur MUX1 est commandé à l'aide du comparateur CMP, de la porte OU exclusif, EX, d'une porte ET, ET1, d'un inverseur IN1, et d'une porte NOR,NO. La porte EX reçoit à une seconde entrée le signal d'horloge complémentaire $\overline{H}$ fourni par la base de temps BT à travers un inverseur IN2. Une sortie de la porte EX est reliée à une première entrée de la porte NO ayant une seconde entrée reliée à une sortie de la porte ET1. Des première et seconde entrées de la porte ET1 reçoivent respectivement les bits de signalisation complémentaires $\overline{SP}$ et le signal d'horloge H. L'inverseur IN1 reçoit les bits de signalisation SP délivrés par la première sortie du port D0 de la matrice de rotation d'entrée MRE (Fig. 1) et produit en sortie les bits complémentaires $\overline{SP}$. Une sortie de la porte NO fournit un signal de commande S1 appliqué à une entrée de sélection du multiplexeur MUX1. Les états "0" et "1" du signal S1 sélectionnent l'écriture de la valeur lue et non incrémentée (PEj -1) et l'écriture de la valeur lue et incrémentée (PEj) respectivement dans la cellule de mémoire adressée MPj.

Le multiplexeur MUX2 reçoit à des premières et secondes entrées parallèles respectivement les mots d'auto-acheminement AA fournis par le port

D0 de la matrice MRE et les adresses de multiplex et de files $\overline{AM}$ transmises par le bus $\overline{e}$. Le signal d'horloge H est appliqué à une entrée de sélection du multiplexeur MUX2 et commande alternativement l'aiguillage des mots d'auto-acheminement AA et des adresses $\overline{AM}$ vers les entrées d'adresses des cellules MP0 à MP15. Lorsque le signal H est à l'état "1", lors de l'écriture d'un paquet dans la mémoire tampon MT, le mot d'auto-acheminement AA du paquet est transmis dans le bus BA par le multiplexeur MUX2 et adresse la cellule MPj correspondante. Lorsque le signal H est à l'état "0", lors de la lecture d'un paquet dans la mémoire tampon MT, l'adresse $\overline{AM}$ d'une file FSj est transmise dans le bus BA et adresse la cellule MPj correspondante. Pendant chaque écriture de paquet, H = "1", la cellule MPj adressée par le mot d'auto-acheminement AA est successivement sélectée en lecture, 2H = "0", pendant une première demi-période de durée T/4 du signal 2H et en écriture, 2H = "1", pendant une seconde demi-période de durée T/4 du signal 2H, afin de lire la valeur (PEj) - 1 mémorisée dans la cellule MPj pour déterminer les valeurs (PEj) et (PEj) + 1 du pointeur PEj et éventuellement d'actualiser la valeur mémorisée (PEj) - 1, par incrémentation, après écriture du paquet dans la file FSj. De même, pendant chaque lecture de paquet, la cellule MPj adressée par l'adresse $\overline{AM}$ est sélectée successivement en lecture et en écriture, pendant les première et seconde demi-périodes du signal 2H.

L'incrémentation de la valeur mémorisée (PEj) - 1 dans une cellule MPj, par écriture de la valeur (PEj) dans la cellule MPj, est commandée lorsque le signal S1 est à l'état "1" ; cette incrémentation est exprimée par l'équation logique :
$$S1 = \overline{H \cdot (EG + \overline{SP})} + \overline{\overline{H}.EG} = H.\overline{EG}.SP + \overline{H}.EG$$

La non-incrémentation de la valeur (PEj) - 1 est exprimée par l'équation logique complémentaire :
$$\overline{S1} = H.(EG + \overline{SP}) + \overline{H}.\overline{EG}.$$

La valeur (PEj) - 1 mémorisée dans la cellule adressée MPj n'est pas incrémentée pendant une écriture de paquet, H = "1", dans un premier cas où le signal EG = "1", c'est-à-dire (PEj) + 1 = (PL), indique que la file FSj adressée est pleine, et dans un second cas $\overline{SP}$ = "1", c'est-à-dire où le paquet est un paquet vide PV et n'est donc pas à écrire dans la mémoire tampon. Dans ces premier et second cas, les paquets entrants sont néanmoins écrits dans la file FSj, mais dans des cellules où ils seront "écrasés" par la suite et donc perdus. De plus, pendant une lecture, $\overline{H}$ = "1", dans le cas où EG = "1", c'est-à-dire (PL) = (PEj), la file adressée FSj est vide et la valeur (PEj) - 1 mémorisée dans la cellule adressée (MPj) est incrémentée. Le pointeur de lecture PL "pousse" alors devant lui le pointeur d'écriture PEj. La nécessité de cette incrémentation éventuelle de la valeur (PEj) - 1 pendant des lectures apparaîtra plus clairement par la suite.

Le multiplexeur MUX3 est destiné à aiguiller vers les entrées d'adresses d'écriture de la mémoire tampon MT, une adresse d'écriture AE. L'adresse AE est composée du mot d'auto-acheminement AA et du pointeur PEj correspondant, lorsque le paquet à écrire est un paquet valide d'information PQ, et que la file correspondante FSj n'est pas pleine. L'adresse d'écriture AE est égale à l'adresse AL de la dernière cellule de paquet lue de la mémoire MT, lorsque le paquet à écrire est un paquet de synchronisation PV, ou que la file correspondante FSj est pleine. Dans ce dernier cas, la valeur (PEj) - 1 mémorisée dans la cellule MPj n'est pas incrémentée, S1 = 0, et le paquet PV ou PQ écrit dans la dernière cellule de paquet lue dans la mémoire MT est "écrasé" et perdu consécutivement à une écriture postérieure d'un paquet dans la même file de sortie FSj. Le multiplexeur MUX3 reçoit l'adresse de lecture AL convoyée par les bus $\overline{e}$ et f à des secondes entrées parallèles. Un signal de commande S2 fourni par une porte ET, ET2, est appliqué à une entrée de sélection du multiplexeur MUX3. Le signal S2 sélectionne, à l'état "1", les premières entrées du multiplexeur MUX3 et, à l'état "0", les secondes entrées du multiplexeur MUX3. Le signal S2 est produit à partir des signaux EG et H et des bits de signalisation SP, à l'aide des portes NA et ET2. Le signal H est appliqué à une seconde entrée de la porte NA recevant à sa première entrée le signal EG fourni par le comparateur CMP. Une sortie de la porte NA est reliée à une première entrée de la porte ET2. Une seconde entrée de la porte ET2 reçoit les bits de signalisation SP. Le signal S2 est exprimé par l'équation logique :
$$S2 = \overline{EG}.SP + \overline{H}.SP.$$

Une porte logique ET à deux entrées ET3 est prévue dans le circuit GPE afin de détecter l'état "file vide" de la file FSj adressée en lecture. La porte ET3 reçoit les signaux EG et $\overline{H}$ respectivement à des première et seconde entrées et produit un bit de commande d'insertion de paquet de synchronisation CSj à l'état "1" lorsqu'un état "file vide" de la file adressée FSj est détecté. Le bit CSj à l'état "1" commande dans le circuit d'insertion de paquets de synchronisation IPS, montré à la Fig. 2, l'insertion d'un paquet de synchronisation PV dans le multiplex sortant Sj correspondant à la file adressée FSj. Le circuit IPS comprend un registre à décalage RGV recevant le signal H par une entrée d'horloge et les bits CS15, ... CSj, ... CS0 délivrés cycliquement en série par la porte ET3, et quinze commutateurs d'octet CTR1 à CTR15 commandés respectivement par quinze sorties du registre RGV. Lorsque la file FSj adressée est vide, un intervalle de temps est disponible dans le multiplex sortant Sj et le bit CSj = "1" commande dans le circuit IPS la transmission en diagonale d'un paquet de synchronisation PV vers la matrice de rotation de sortie MRS.

Pour plus de précisions sur la structure et le fonctionnement du circuit IPS, le lecteur se reportera à la demande de brevet EP-A-0113639 qui décrit, en détail, en référence aux Figs. 8, 9 et 10, un circuit d'insertion de paquets de synchronisation analogue au circuit IPS et comprenant un registre à décalage et 16 commutateurs d'octet.

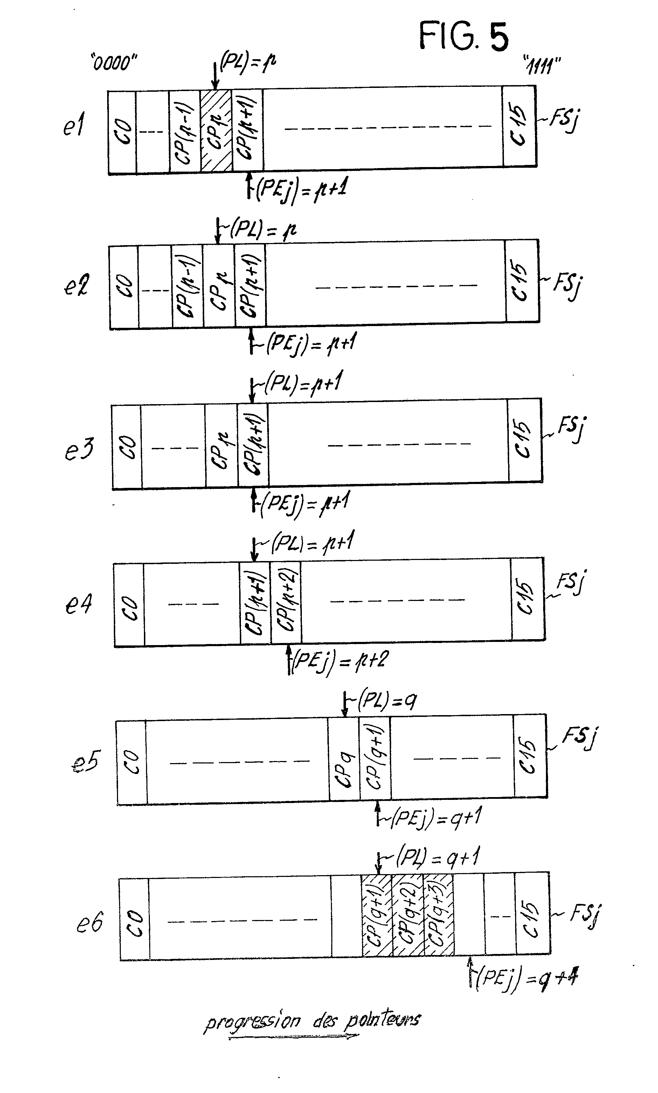

Six états successifs de la file FSj, e1 à e6, au voisinage de l'état "file vide" sont montrés à la Fig.5.

De l'état e1 à l'état e5, aucun paquet entrant destiné à être mémorisé dans la file FSj n'est transmis par la matrice MRE. A l'état e1, toutes les cellules de la file FSj sont vides à l'exception d'une cellule CPp qui contient un paquet non lu. Le pointeur de lecture PL a la valeur p. Le pointeur d'écriture PEj a la valeur p +1. Après la lecture du paquet contenu dans la cellule CPp, la file FSj passe à l'état e2 où les pointeurs PL et PEj ont toujours respectivement les valeurs p et p + 1. A l'incrémentation de la valeur du pointeur de lecture PL, la file FSj est à l'état e3 où les pointeurs de lecture PL et d'écriture PEj ont la même valeur p + 1. A la lecture de la cellule CP(p + 1), les pointeurs PL et PEj ayant la même valeur p + 1, la porte ET3 (Fig. 5) commande la transmission d'un paquet de synchronisation PV vers la matrice de sortie MRS. En fin de lecture de la cellule CP(p + 1), la valeur du pointeur d'écriture PEj est incrémentée et celui-ci prend la valeur p + 2; la file FSj vient à l'état e4. De l'état e4. De l'état e4 à l'état e5, la valeur du pointeur de lecture PL est incrémentée plusieurs fois jusqu'à la valeur q et les cellules CP(p + 1) à CPq sont lues. La valeur du pointeur PEj est incrémentée consécutivement à chaque lecture des cellules CP(p + 1) à CPq, et elle atteint la valeur q + 1. Le pointeur d'écriture PEj est ainsi "poussé" par le pointeur de lecture PL et indique la première cellule libre FSj. Pendant la lecture des cellules CP(p + 1) à CPq, les valeurs (PL) et (PEj) sont égales et un paquet de synchronisation PV est transmis à la matrice MRS à chaque lecture de cellule. Entre l'état e5 et l'état e6, trois paquets sont transmis par la matrice d'entrée MRE à destination de la file FSj. Ces paquets sont écrits respectivement dans les cellules VP(q + 1) à CP(q + 3) et le pointeur d'écriture PEj atteint, après écriture du dernier paquet, la valeur q + 4. Les cellules CP(q + 1), CP(q + 2), et CP(q + 3) sont ensuite lues lorsque le pointeur de lecture PL prend les valeurs q + 1, q + 2, et q + 3, respectivement.

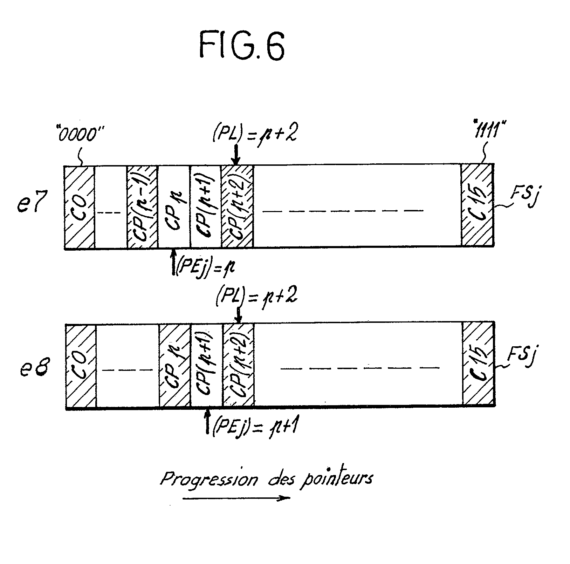

Deux états successifs de la file FSj, e7 et e8, au voisinage de l'état "file pleine" sont montrés à la Fig. 6.

Le débit des paquets entrants destinées à être mémorisés dans la file FSj est ici considéré très supérieur au débit de sortie des paquets lus dans la file FSj, de telle sorte que la file FSj sera saturée. A l'état e7, toutes les cellules de la file FSj sont pleines à l'exception des cellules CPp et CP(p+1). Le pointeur d'écriture PEj a la valeur p. Le pointeur de lecture PL a la valeur p + 2. Un paquet entrant est chargé dans la cellule CPp et le pointeur d'écriture PEj prend la valeur p + 1; la file FSj est alors à l'état e8. A l'état e8, les pointeurs PEj et PL ont respectivement les valeurs p + 1 et p + 2 et sont donc tels que (PL) = (PEj) + 1. Le signal EG est alors à l'état "1" pour tous paquets entrants suivants présentés par la matrice MRE pour être écrits dans la file FSj ; ces paquets ne sont pas écrits dans la file FSj à l'état "file pleine". Le pointeur PEj n'est pas incrémenté et garde la valeur p + 1. A cet état "file pleine" la cellule CP(p+1) ne contient pas de paquet.

Chacune des cellules MP0 à MP15 de la mémoire de pointeurs MP est sollicitée deux fois en lecture et deux fois en écriture pendant une période T du signal H. Dans le cas où la période T est de durée trop faible pour permettre l'utilisation de mémoires, la mémoire de pointeurs peut être remplacée par un circuit à compteurs autorisant des performances de vitesse supérieures.

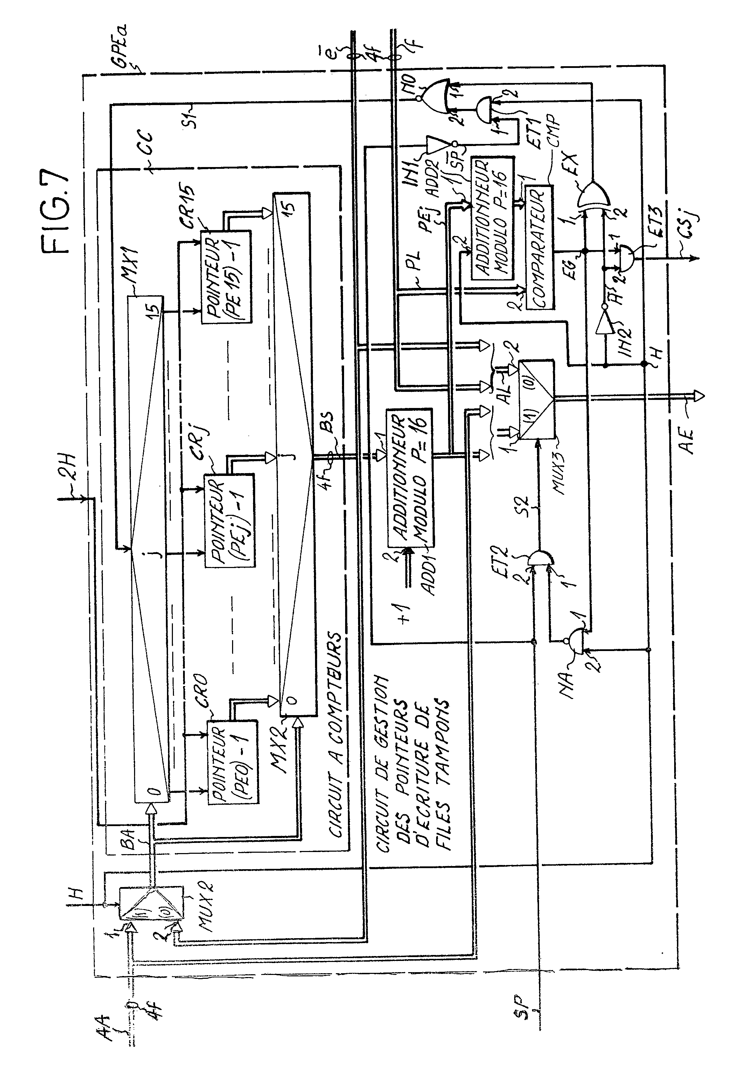

Un circuit de gestion des pointeurs d'écriture de files tampons GPEa dans lequel la mémoire de pointeurs MP est remplacée par un circuit à compteurs CC est montré à la Fig.7. Le circuit GPEa fonctionne de manière analogue au circuit GPE décrit précédemment et comprend globalement les mêmes éléments fonctionnels.

Le circuit à compteurs CC comprend J = 16 compteurs binaires modulo P = 16, CR0 à CR15, et des premier et second multiplexeurs, MX1 et MX2.

Les compteurs CR0 à CR15 comme les cellules MP0 à MP15 (Fig. 4) ont pour fonction de mémoriser respectivement les valeurs (PE0) - 1 à (PE15) - 1. Des entrées de validation d'horloge des compteurs CR0 à CR15 reçoivent le signal d'horloge 2H qui n'autorise l'incrémentation éventuelle d'un compteur CRj sélectionné que sur un état de commande d'écriture 2H = "1" du signal d'horloge 2H. Dans le circuit GPEa, le multiplexeur MUX1 (Fig. 4) est supprimé et le signal de commande S1 fourni par la porte NON-OU, N0, est appliqué à une entrée d'horloge d'un compteur CRj sélectionné par le multiplexeur MX1. Le multiplexeur MX1 comprend une entrée de données reliée à la sortie de la porte NO pour recevoir le signal S1 et P = 16 sorties 0 à 15 reliées respectivement aux entrées d'horloge des P = 16 compteurs CR0 à CR15. Le bus d'adresses BA relie les sorties parallèles du multiplexeur MUX2 à des entrées parallèles de sélection des multiplexeurs MX1 et MX2. La sortie j du multiplexeur MX1 sélectée par le mot AA ou l'adresse $\overline{AM}$ fourni par le multiplexeur MUX2 applique le signal S1 à l'entrée d'horloge du compteur CRj. Le compteur CRj est incrémenté dans le cas uniquement où le signal S1 = "1". Le multiplexeur MX2 comprend P = 16 ports à quatre entrées 1 à 15 reliés respectivement à des sorties parallèles des P = 16 compteurs CR0 à CR15. Un port à quatre sorties du multiplexeur MX2 est relié au bus BS et délivre la valeur (PEj) - 1 fournie par le compteur CRj sélecté.

**Revendications**

1 - Circuit pour gérer des pointeurs d'écriture (PE0 à PE15) d'une pluralité de J files tampons (FS0 à FS15), où J est un entier prédéterminé, mémorisant temporairement par ordre chronologique d'arrivée des groupes de données (PQ), avec chaque groupe de données (PQ) entrant dans les files étant fourni un mot d'acheminement (AA) sélectant la file tampon (FSj) dans l'une des cellules de laquelle est à écrire le groupe de données entrant (PQ), les files (FS0 à FS15) étant lues cycliquement sous la commande d'une base de temps (BT) délivrant des adresses ($\overline{AM}$) des files à lire et un pointeur de lecture (PL) de cellules des files, la base de temps incrémentant d'une unité ledit pointeur de lecture (PL) à chaque cycle de lecture de files afin de lire successivement les cellules dans chacune des files, caractérisé en ce qu'il comprend :

des moyens (MP, CC) pour mémoriser des valeurs décrémentées ((PE0) = 1 à (PE15) - 1) de J pointeurs d'écriture respectivement associés aux J files tampons, un pointeur d'écriture identifiant une cellule de la file respective susceptible d'être libre pour mémoriser un prochain groupe de données entrant à écrire dans ladite file,

des moyens (MUX2, BA) pour lire la valeur décrémentée ((PEj)-1) du pointeur d'écriture (PEj) associé à une file sélectée (FSj) dans les moyens pour mémoriser (MP, CC) en fonction du mot d'acheminement (AA) pendant une écriture (H = "1") d'un groupe de données entrant (PQ) dans la file sélectée et en fonction de l'adresse de file (AM̄) pendant une lecture (H = "0") d'un groupe de données sortant (PQ) de la file sélectée,

des premiers moyens (ADD1) pour incrémenter d'une unité pendant une lecture (H = "0") d'un groupe de données sortant, la valeur décrémentée ((PEj) - 1) lue dans les moyens pour mémoriser (MP, CC) afin de déduire la valeur ((PEj) du pointeur d'écriture (PEj) de la file sélectée (FSj),

des seconds moyens (ADD1, ADD2) pour incrémenter de deux unités pendant une écriture (H = "1") d'un groupe de données entrant (PQ), la valeur décrémentée ((PEj) - 1) lue dans les moyens pour mémoriser (MP, CC) afin de déduire la valeur incrémentée d'une unité ((PEj) + 1) du pointeur d'écriture (PEj) de la file sélectée (FSj),

des moyens de comparaison de pointeurs d'écriture et de lecture (CMP) pour détecter une égalité (EG = "1") entre la valeur ((PEj)) du pointeur d'écriture (PEj) associé à la file sélectée (FSj) ou la même valeur incrémentée d'une unité ((PEj) + 1) et la valeur ((PL)) du pointeur de lecture (PL) ; et

des moyens (MUX1, IN1, IN2, EX, N0, ET1) pour écrire dans les moyens pour mémoriser (MP, CC) la valeur ((PEj)) du pointeur d'écriture (PE) de la file sélectée (FSj), soit consécutivement à l'écriture (H = "1") d'un groupe de données entrant (PQ) dans la cellule (CP) de la file sélectée (FSj) identifiée par le pointeur d'écriture (PEj) pour laquelle les moyens de comparaison (CMP) ne détectent pas d'égalité (EG = "0") entre la valeur incrémentée d'une unité ((PEj)) + 1) du pointeur d'écriture (PE) de la file sélectée (FSj) et la valeur ((PL)) du pointeur de lecture (PL), soit consécutivement à la lecture (H = "0") d'un groupe de données sortant (PQ) dans la file sélectée (FSj) pour laquelle les moyens de comparaison (CMP) détectent une égalité (EG = 1) entre la valeur ((PEj)) du pointeur d'écriture (PE) de la file sélectée (FSj) et la valeur du pointeur de lecture (PL).

2 - Circuit conforme à la revendication 1, caractérisé en ce qu'il comprend des moyens (MUX3, NA, ET2) recevant le mot d'acheminement (AA) et le pointeur d'écriture (PEj) de la file sélectée (FSj) à des premières entrées (1), l'adresse de file (AM̄) et le pointeur de lecture (PL) à des secondes entrées (2), pour produire par sélection des premières et secondes entrées (1 et 2) une adresse d'écriture (AE) destinée aux files (FS0 à FS15) et composée du mot d'acheminement (AA) et du pointeur d'écriture (PEj) dans le cas où un groupe de données entrant (PQ) est signalé valide (SP = "1") par un signal de validation des groupes de données entrants (SP) et qu'une inégalité (EG = "0") entre les valeurs des pointeurs d'écriture (PEj) et de lecture (PL) est détectée par les moyens de comparaison de pointeurs (CMP), et composée de l'adresse de file (AM̄) et du pointeur de lecture (PL) dans le cas complémentaire.

3 - Circuit conforme à la revendication 2, caractérisé en ce que les moyens pour produire une adresse d'écriture (MUX3, NA, ET2) comprennent des moyens logiques (NA, ET2) pour sélecter les premières et secondes entrées (1 et 2) des moyens pour produire (MUX3) en fonction dudit signal de validation (SP), d'un signal d'horloge (H) fourni par la base de temps (BT) séquençant les écritures (H = "1") et lectures (H = "0") des groupes de données dans les files (FS0 à FS15), et d'un signal (EG) produit par les moyens de comparaison de pointeurs (CMP) et signalant l'égalité et l'inégalité des valeurs des pointeurs d'écriture (PEj) et de lecture (PL).

4 - Circuit conforme à l'une quelconque des revendications 1 à 3, caractérisé en ce que les moyens pour lire (MUX2, BA) sont constitués par un multiplexeur (MUX2) recevant le mot d'acheminement (AA) à des premières entrées (1), l'adresse de file (AM̄) à des secondes entrées (2), et le signal d'horloge (H) à une entrée de sélection des entrées, ledit signal d'horloge (H) commandant à des premier ("1") et second ("0") états logiques la transmission respectivement du mot d'acheminement (AA) et de l'adresse de file (AM̄) vers des entrées d'adresses des moyens pour mémoriser (MP, CC).

5 - Circuit conforme à l'une quelconque des revendications 1 à 4, caractérisé en ce que les premiers et seconds moyens pour incrémenter comprennent chacun un additionneur modulo P (ADD1, ADD2), où P est le nombre de cellules dans une file (FS).

6 - Circuit conforme à l'une quelconque des revendications 1 à 5, caractérisé en ce que les moyens pour écrire (MUX1, IN1, IN2, EX, N0, ET1) reçoivent le signal d'horloge (H), un signal de validation (SP), et le signal (EG) produit par les moyens de comparaison (CMP), et commandent l'écriture dans les moyens pour mémoriser (MP, CC) de la valeur décrémentée lue ((PEj) - 1) du pointeur d'écriture (PEj) de la file sélectée dans le cas où une égalité (EG = "1") est détectée par les moyens de comparaison (CMP) et dans le cas où un groupe de données entrant est signalé (SP = "0") comme étant invalide par le signal de validation (SP).

7 - Circuit conforme à l'une quelconque des revendications 1 à 6, caractérisé en ce que les moyens pour mémoriser (MP) comprennent J cellules de mémoire (MP0 à MP15) mémorisant respectivement les valeurs décrémentées ((PE0) - 1 à (PE15) - 1) des J pointeurs d'écriture (PE0 à PE15) et adressées individuellement à travers les moyens pour lire (MUX2, BA) par le mot d'acheminement (AA) pendant une écriture (H = "1") de groupe de données entrant et par l'adresse de file (AM) pendant une lecture (H = "0") de groupe de données sortant.

8 - Circuit conforme à l'une quelconque des revendications 1 à 6, caractérisé en ce que les moyens pour mémoriser (CC) comprennent J compteurs binaires (CR0 à CR15) commandés sélectivement par les moyens pour écrire (IN1, IN2, EX, N0, ET1), mémorisant respectivement les valeurs décrémentées ((PE0) - 1 à (PE15) - 1) des J pointeurs d'écriture (PE0 à PE15) et adressés individuellement à travers les moyens pour lire (MUX2, BA) par le mot d'acheminement (AA) pendant une écriture (H = "1") de groupe de données entrant et par l'adresse de file (AM) pendant une lecture (H = "0") de groupe de données sortant, et en ce qu'un compteur adressé (CCj) est incrémenté en réponse soit à une inégalité de pointeurs détectée (EG = "0") pendant une écriture de groupe de données (H = "1") signalé valide par le signal de validation (SP), soit à une égalité de pointeurs détectée (EG = "1") pendant une lecture de groupe de données (H = "0").

9 - Circuit conforme à l'une quelconque des revendications 1 à 8, caractérisé en ce qu'il comprend des moyens (ET3) pour signaler l'égalité (EG = "1") des valeurs du pointeur d'écriture (PEj) de la file sélectée (FSj) et du pointeur de lecture (PL) pendant des lectures (H = "0") de groupes de données sortants.

10 - Système de commutation temporel de paquets auto-acheminables dans lequel les paquets (PQ) délivrés par une pluralité de multiplex temporels entrants (E0 à E15) sont à commuter vers une pluralité de J multiplex temporels sortants (S0 à S15), chaque paquet (PQ) incluant un mot d'acheminement (AA) identifiant le multiplex sortant (Sj) vers lequel doit être commuté le paquet,
ledit système comprenant :
des moyens d'entrée (CE0 à CE15) associés respectivement aux multiplex entrants (E0 à E15) pour détecter les paquets (PQ) dans les multiplex entrants et les transmettre en synchronisme, et pour produire un bit de signal de validation (SP) avec chaque paquet transmis, ledit bit ayant un état logique prédéterminé ("0") pour signaler un paquet invalide (PV),
des moyens (MRE) reliés aux moyens d'entrée (E0 à E15) pour multiplexer les paquets transmis par les moyens d'entrée, une mémoire tampon (MT) comprenant une pluralité de J files tampons (FS0 à FS15) associées respectivement aux J multiplex sortants (S0 à S15) pour mémoriser temporairement les paquets, et
des moyens (MRS) pour démultiplexer les paquets lus cycliquement dans les files (FS0 à FS15) de la mémoire tampon (MT) sous la commande d'une base de temps (BT) délivrant une adresse de file (AM) et un pointeur de lecture de file (PL), et transmettre les paquets démultiplexés dans les multiplex sortants (S0 à S15),
caractérisé en ce qu'il comprend un circuit pour gérer des pointeurs (GPE) conforme à l'une quelconque des revendications 1 à 9 recevant les mots d'acheminement (AA) de paquets, le bit de signal de validation (SP), l'adresse de file (AM) et le pointeur de lecture (PL) pour gérer les J pointeurs d'écriture (PE0 à PE15) respectivement des J files tampons (FS0 à FS15) dans ladite mémoire tampon (MT).

11 - Système de commutation de paquets conforme à la revendications 10, caractérisé en ce que :
les moyens pour multiplexer comprennent des moyens (MRE) pour réaliser une conversion paragonale des paquets détectés (PQ) transmis par les moyens d'entrée (CE0 à CE15),
en ce que la mémoire tampon (MT) comprend :
des sous-mémoires (M0 à M15) équivalentes aux J files tampons (FS0 à FS15) et en nombre égal au nombre (I) de mots dans un paquet pour mémoriser respectivement en parallèle les mots de chacun des paquets,
plusieurs moyens d'écriture (ADE1 à ADE15) connectés en cascade et associés aux sous-mémoires (M0 à M15) pour retarder successivement une adresse d'écriture (AE) fournie par les moyens pour produire (MUX3, NA, ET2) conforme à la revendication 2 ou 3 afin d'adresser successivement en écriture par ladite adresse d'écriture lesdites sous-mémoires (M0 à M15) au fur et à mesure de la transmission en diagonale des mots (B0 à B15) de paquets (PQ) par les moyens pour multiplexer (MRE),
plusieurs moyens de lecture (ADL1 à ADL15) connectés en cascade et associés aux sous-mémoires (M0 à M15) pour retarder successivement une adresse de lecture (AL) fournie par la base de temps (BT) afin d'adresser successivement en lecture par ladite adresse de lecture lesdites sous-mémoires (M0 à M15) et de commander la transmission en diagonale d'un paquet vers les moyens pour démultiplexer (MRS),
et en ce que les moyens pour démultiplexer comprennent des moyens (MRS) pour réaliser une conversion paragonale des paquets (PQ) lus dans la mémoire tampon (MT), inverse de la conversion paragonale dans les moyens pour multiplexer (MRE).

FIG.1

EP 0 323 310 A1

1/7

2/7

FIG.2

FIG.3

*progression des pointeurs*

"0000"    $(PL)=q$    "1111"

CP0 — — CPq — — CP15    FS0,S0

PE0    $(PL)=q$

"0001"

CP0 — — CPq — — CP15    FS1,S1

PE1

"j"    $(PL)=q$

CP0 — — CPn CPq — — CP15    FSj,Sj

$(PEj)=n$

*Lecture des files*

"1111"    $(PL)=q$

CP0 — — CPq — — CP15    FS 15,S15

PE 15

P=16

# FIG.4

GPE

MUX1 — S1 — BE — MP

POINTEUR (PE15)–1 — MP15

POINTEUR (PEj)–1 — MPj

POINTEUR (PE0)–1 — MP0

MÉMOIRE DE POINTEURS D'ÉCRITURE — MP — AM — BA — AF — BS

CIRCUIT DE GESTION DES POINTEURS D'ÉCRITURE DE FILES TAMPONS

ADDITIONNEUR MODULO P=16 — ADD1 — +1

ADDITIONNEUR MODULO P=16 — ADD2 — PEj — P2

COMPARATEUR — CMP — EX — EG

MUX2 — H — AA — AF

MUX3 — S2 — ET2 — AL — MA

ID0 — ID1 — SP — ET1 — IN2 — H — ET3 — CSj — AE — SP — 2H — H

EP 0 323 310 A1

FIG. 5

progression des pointeurs

# FIG.6

Progression des pointeurs

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | EP-A-0 113 639  (SERVEL)<br>* En entier *<br>--- | 1-11 | H 04 L  11/20 |
| Y | US-A-3 979 733  (FRASER)<br>* Colonne 5, ligne 28 - colonne 8, ligne 49 *<br>--- | 1-11 | |
| A | FR-A-2 539 939  (THOMSON CSF)<br>----- | | |

DOMAINES TECHNIQUES
RECHERCHES (Int. Cl.4)

H 04 L

**Le présent rapport a été établi pour toutes les revendications**

| Lieu de la recherche | Date d'achèvement de la recherche | Examinateur |
|---|---|---|
| LA HAYE | 30-03-1989 | GERLING J.C.J. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................................
& : membre de la même famille, document correspondant

EPO FORM 1503 03.82 (P0402)